# FASCICULE DE BREVET EUROPEEN

(11) **EP 2 028 074 B1**
(45) Date de publication et mention de la délivrance du brevet: **22.06.2011**
(21) Numéro de dépôt: 08354051.8
(22) Date de dépôt: 07.07.2008
(51) Int. Cl.: B61B 7/04, B61B 12/00, B61B 12/02

(54) **Véhicule d'intervention le long d'un câble aérien d'une installation de remontée mécanique**
Servicefahrzeug entlang eines Seils einer Seilbahnanlage
Vehicle for conducting repairs along an overhead cable of a rope railway

(30) Priorité: 20.08.2007 FR 0705940
(43) Date de publication de la demande: 25.02.2009
(73) Titulaire: Pomagalski, 38340 Voreppe (FR)
(72) Inventeur: Coudurier, Stéphane, 38000 Grenoble (FR); Martin, Philippe, 38340 Voreppe (FR); Bonifat, Laurent, 38500 La Buisse (FR); Tamisier, Franckie, 38330 Saint-Nazaire-Les-Eymes (FR)
(74) Mandataire: Hecké, Gérard

(56) Documents cités:
- EP-A- 0 227 540
- EP-A- 0 445 612
- EP-A- 0 710 597
- FR-A- 2 575 986

## Description

### Domaine technique de l'invention

L'invention est relative à un véhicule d'intervention le long d'un câble aérien d'une installation de remontée mécanique, comprenant une cabine suspendue au câble par des moyens de liaison comprenant :
- une partie supérieure fixée au câble,
- une partie inférieure fixée à la cabine,
- et des moyens d'articulation de la partie supérieure par rapport à la partie inférieure, autorisant un pivotement relatif, dans un plan vertical parallèle au câble, des parties supérieure et inférieure formant entre elles un angle variable.

### État de la technique

Lorsqu'il est nécessaire d'intervenir le long d'un câble aérien d'une installation de remontée mécanique, notamment au niveau d'un balancier d'appui et de guidage du câble monté sur un pylône de l'installation (en cas d'incident imprévu ou bien en cas de maintenance programmée), le personnel en question doit charger tout le matériel indispensable dans une automobile qui permet d'accéder au pylône. Le personnel doit ensuite hisser ce matériel jusqu'aux passerelles des pylônes avant de remplir la mission proprement dite.

Il est clair que la manipulation successive du matériel implique une perte de temps importante, tandis que son hissage jusqu'aux passerelles représente un risque de chute pour le personnel et/ou le matériel ainsi qu'une fatigue superflue. Enfin, il arrive que certains pylônes de l'installation soient inaccessibles en automobile, ce qui engendre une perte de temps et de la fatigue supplémentaires. Ces différents inconvénients prennent d'autant plus d'importance en cas de maintenance programmée au cours de laquelle l'ensemble des balanciers de l'installation sont vérifiés, car il en résulte une augmentation des risques et de la fatigue pour le personnel.

Pour l'exploitation de l'installation, le document EP0227540 décrit une installation dans laquelle les cabines sont accouplées aux câbles porteurs et tracteurs par des suspentes chacune reliée à la cabine par des moyens d'association mobile à la cabine, ces moyens d'association mobile permettant de modifier la position des suspentes l'une par rapport à l'autre et/ou par rapport aux câbles. Les moyens d'association mobile sont des moyens d'articulation réalisant une liaison pivot, glissant ou rotoïde à axe horizontal, longitudinal et/ou transversal. En ligne, sous l'effet de la gravité appliquée à la cabine, de tels moyens d'articulation permettent de s'assurer que la partie inférieure (et donc la cabine) soit automatiquement horizontale quel que soit l'angle d'inclinaison du câble par rapport à l'horizontale. De telles cabines ne permettent pas d'intervenir en ligne de manière confortable et totalement sécuritaire compte tenu du maintien constant d'horizontalité.

### Objet de l'invention

L'objet de l'invention consiste à réaliser un véhicule d'intervention qui limite les risques et la fatigue pour le personnel tout en diminuant le temps d'intervention.

Le véhicule selon l'invention est remarquable en ce que les moyens de liaison comportent d'une part des moyens de réglage de l'angle entre la partie inférieure et la partie supérieure, jusqu'à une position de la cabine inclinée par rapport à la verticale, et d'autre part des moyens de blocage de la cabine en position inclinée.

Lorsque le véhicule d'intervention arrive (grâce au portage et à la traction réalisés par le câble aérien) à proximité du balancier à réparer ou à vérifier, les moyens de réglage sont actionnés par le personnel afin que l'angle entre la partie supérieure et la partie inférieure soit sensiblement égal à zéro. Il en résulte alors que la partie inférieure (et donc la cabine) est sensiblement parallèle au câble. Cette position inclinée de la cabine par rapport à la verticale, assurée ensuite par les moyens de blocage, facilite l'intervention par le personnel directement depuis la cabine sur les balanciers qui, eux aussi, sont inclinés parallèlement à la pente du câble.

Selon un mode de réalisation préférentiel, les moyens de réglage comportent une roue dentée fixée sur la partie supérieure dans un plan parallèle audit plan vertical et coopérant avec une vis sans fin montée à rotation sur la partie inférieure.

Autres caractéristiques techniques :
- la vis sans fin est fixée à une extrémité d'un arbre de transmission muni à son extrémité opposée d'une manivelle positionnée à l'intérieur de ladite cabine,
- des moyens de débrayage sont intercalés entre les moyens d'articulation et les moyens de réglage,
- la partie inférieure comporte un bras de manipulation articulé,
- la cabine comporte au moins une plateforme mobile par des moyens de déplacement entre une position rétractée où la plateforme est logée à l'intérieur de ladite cabine et une position déployée où la plateforme est à l'extérieur de la cabine,
- les moyens de déplacement comportent une charnière d'axe perpendiculaire au câble,
- la cabine comporte des moyens de réglage en hauteur de la charnière par rapport au sol de la cabine,
- la cabine est équipée de moyens d'ajustement de l'inclinaison du plancher de la plateforme en position déployée, par rapport au sol de la cabine,
- les moyens de déplacement comportent une liaison glissière de direction incluse dans un plan perpendiculaire au sol de la cabine,
- la cabine comporte un groupe électrogène et/ou une batterie d'alimentation électrique et/ou une centrale de graissage.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, dans lesquels :
- la figure 1 représente, suivant une vue transversale, un exemple de véhicule d'intervention selon l'invention, dans laquelle les plateformes sont en position rétractée,
- la figure 2 est une vue transversale du véhicule de la figure 1, dans laquelle les plateformes sont en position déployée,
- la figure 3 est une vue longitudinale du véhicule des figures 1 et 2,
- la figure 4 est une vue de dessus du véhicule des figures 1 à 3.

### Description d'un mode préférentiel de l'invention

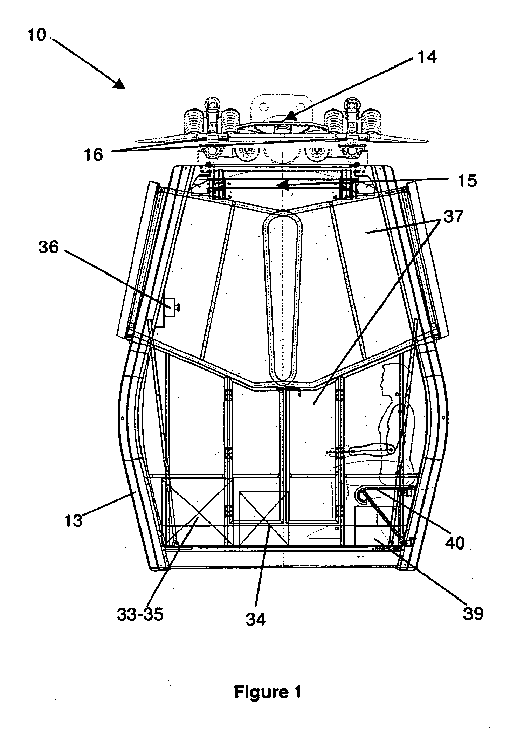

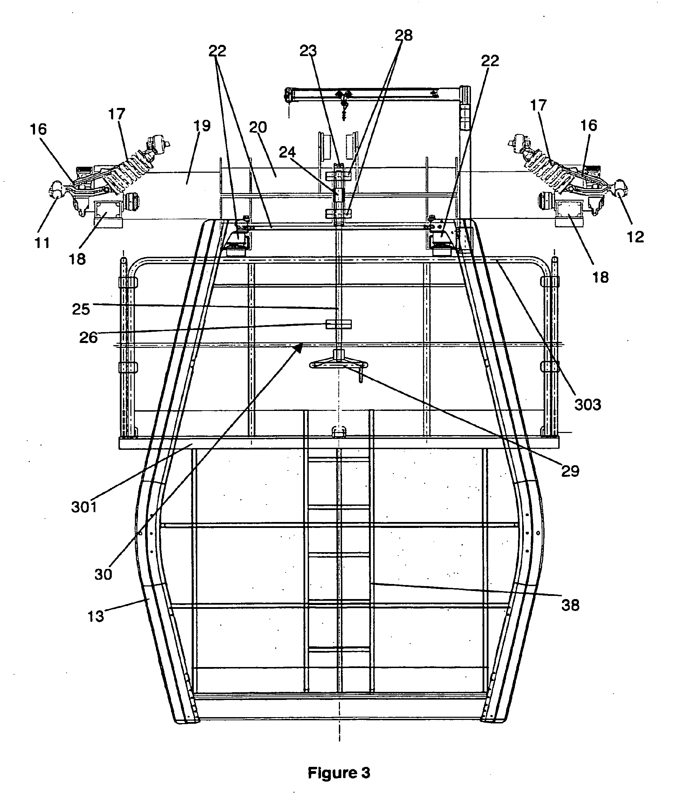

Le véhicule d'intervention 10 représenté sur les figures 1 à 4 est destiné à permettre l'accès au personnel de maintenance le long d'une installation de remontée mécanique comprenant deux câbles 11, 12 parallèles tracteurs-porteurs à défilement continu. Ce type d'installation à deux câbles disposés dans un même plan horizontal, permet une augmentation notable de la stabilité latérale et une résistance accrue à l'action des vents transversaux.

Sur les figures, les deux câbles 11, 12 s'étendent parallèlement entre deux stations (non représentées) équipées de poulies de renvoi. Les deux câbles 11, 12 constituent deux boucles sans fin à défilement continu disposées à un même niveau horizontal et portant des cabines (non représentées) accouplées en ligne aux câbles 11, 12, pour circuler en circuit fermé sur les voies aller et retour constituées par les deux boucles de câbles. Les deux câbles 11, 12 sont entraînés en synchronisme par des moteurs appropriés.

Conformément à l'invention, le véhicule d'intervention 10 consiste en une cabine 13 suspendue aux câbles 11, 12 par des moyens de liaison comprenant une partie supérieure 14 fixée aux câbles 11, 12 et une partie inférieure 15 fixée au toit de la cabine 13. La cabine 13 est d'un type différent des cabines normalement utilisées pour l'exploitation de l'installation, conformément à la suite de la description.

La partie inférieure 15 comporte une suspension disposée dans le plan longitudinal vertical de symétrie des câbles 11, 12 et articulée, par des moyens d'articulation, à la partie supérieure 14 qui comporte un chariot portant deux paires de pinces débrayables 16 pour solidariser le chariot aux deux câbles 11, 12 en ligne et pour désaccoupler le véhicule d'intervention 10 dans les stations par débrayage des pinces 16. Le chariot porte deux pinces 16 pour chaque câble 11, 12 et ces pinces 16 sont décalées l'une par rapport à l'autre dans la direction longitudinale de déplacement du chariot. Les deux pinces 16 accouplées à un même câble 11, 12 sont disposées symétriquement de part et d'autre de l'axe transversal de symétrie du chariot.

Le chariot est constitué de deux poutres longitudinales 18 parallèles qui sont reliées entre elles par un tube transversal 19 de section extérieure circulaire. Les pinces 16 d'un même câble 11, 12 sont montées à proximité des extrémités d'une même poutre 18. Le tube transversal 19 est perpendiculaire aux poutres longitudinales 18. Les poutres longitudinales 18 et le tube transversal 19 sont sensiblement coplanaires. La distance transversale séparant les poutres longitudinale 18 est adaptée à l'écartement entre les câbles 11, 12, lequel écartement est supérieur à la largeur du véhicule 10.

Les moyens d'articulation, qui comprennent d'abord le tube transversal 19 solidaire de la partie supérieure 14, comportent également un fourreau 20 solidaire de la partie inférieure 15 et enveloppant le tube transversal 19 avec interposition de bagues de roulement. Ainsi, le fourreau 20 est monté à rotation autour du tube transversal 19. Le fourreau 20, qui est constitué par un montage démontable à double coquille, fait partie intégrante de la suspension évoquée précédemment.

Les quatre pinces 16 constituent un quadrilatère rigide de liaison entre les câbles 11, 12. Il en résulte une très grande stabilité de la cabine 13 au roulis et au lacet, tandis que les moyens d'articulation offrent une très grande liberté de mouvement de la cabine 13 pour le tangage par pivotement du fourreau 20 autour du tube transversal 19. Autrement dit, les moyens d'articulation de la partie supérieure 14 par rapport à la partie inférieure 15, autorisent un pivotement relatif, dans un plan vertical parallèle aux câbles 11, 12 (c'est-à-dire le plan vertical de symétrie des câbles 11, 12), des parties supérieure 14 et inférieure 15 formant entre elles un angle variable (non représenté). Par contre, les moyens d'articulation n'offre aucune possibilité de pivotement relatif dans un plan vertical transversal.

Chaque pince 16 est avantageusement montée sur le chariot par l'intermédiaire d'un bloc amortisseur 17 permettant une légère rotation d'une pince 16 par rapport à l'autre sur un même câble 11, 12 et des pinces 16 de l'un des câbles 11, 12 par rapport à celles de l'autre câble 11, 12 pour éviter tout gauchissement du chariot.

Quatre bras de support 21, faisant partie intégrante de la suspension, assurent une liaison rigide entre le fourreau 20 et un châssis 22 solidaire du toit de la cabine 13. Le châssis 22 appartient à la partie inférieure 15 des moyens de liaison, et peut comporter un montage d'au moins deux poutres longitudinales et d'au moins une poutre transversale.

Selon l'invention, le véhicule d'intervention 10 comporte en outre des moyens de réglage de l'angle entre la partie inférieure 15 et la partie supérieure 14, jusqu'à une position de la cabine 13 inclinée par rapport à la verticale. Pendant ce réglage, la cabine 13 effectue un pivotement dans le plan vertical de symétrie des câbles 11, 12, ledit pivotement étant pratiqué par pivotement du fourreau 20 autour du tube transversal 19. Dans la variante représentée, les moyens de réglage comportent une roue dentée 23 fixée sur la partie supérieure 14 dans un plan parallèle au plan vertical de symétrie des câbles 11, 12. La roue dentée 23 coopère avec une vis sans fin 24 montée à rotation sur la partie inférieure 15. Plus précisément, la roue dentée 23 est solidaire de la partie médiane du tube transversal 19, l'axe de la roue dentée 23 coïncidant avec celui du tube transversal 19. Le diamètre nominal de la roue dentée 23 est tel que les dents font saillie à l'extérieur du fourreau 20 au travers d'une fente traversante agencée dans l'épaisseur du fourreau 20 suivant un plan de coupe du fourreau 20 perpendiculaire à son axe. Il est clair que la roue dentée 23 peut être formée par une roue complète ayant des dents sur la totalité de sa périphérie, mais peut aussi n'être constituée que par un secteur angulaire. D'autre part, la vis sans fin 24 est fixée à une extrémité d'un arbre de transmission 25 muni à son extrémité opposée d'une manivelle 29 positionnée à l'intérieur de ladite cabine 13. En pratique, la vis sans fin 24 est montée à rotation sur la partie inférieure 15 car elle est montée fixe à l'extrémité de l'arbre de transmission 25 qui est lui-même monté à rotation sur la partie inférieure 15. À cet effet, l'arbre de transmission 25 est guidé à rotation, dans sa partie inférieure, dans un premier coussinet 26 monté à l'extrémité d'un support 27 solidaire du châssis 22 et s'étendant en direction du sol de la cabine 13, et, dans sa partie supérieure, dans une paire de deuxièmes coussinets 28 solidaires du fourreau 20. L'arbre de transmission 25 est, dans cette variante particulière, perpendiculaire au sol de la cabine 13.

Il ressort de ce qui précède que l'actionnement de la manivelle 29 par le personnel embarqué à bord de la cabine 13 entraîne en rotation l'arbre de transmission 25. Il en résulte un mouvement de rotation de la vis sans fin 24 par rapport à la partie inférieure 15. Les dents de la vis sans fin 24 étant engagées dans les dents de la roue dentée 23, le mouvement de rotation de la vis sans fin 24 provoque le pivotement relatif du fourreau 20 autour du tube transversal 19. Autrement dit, l'actionnement manuel de la manivelle 29 permet de régler à souhait l'angle que forment entre elles les parties supérieure 15 et inférieure 14.

Sans action sur les moyens de réglage et sous l'effet de la gravité appliquée à la cabine 13, le pivotement libre du fourreau 20 autour du tube transversal 19 permet de s'assurer que la partie inférieure 15 (et donc la cabine 13 toute entière) soit automatiquement horizontale quel que soit l'angle d'inclinaison des câbles 11, 12 par rapport à l'horizontale. Dans cette position horizontale, le véhicule d'intervention 10 est déplacé le long de la ligne grâce au portage et à la traction réalisés par les câbles 11, 12. Lorsque le véhicule 10 arrive à proximité du balancier à réparer ou à vérifier, le personnel appuie sur un bouton d'arrêt 36 provoquant l'émission, par télécommande sécurisée, d'un ordre d'arrêt pour stopper le défilement des câbles 11, 12. Après l'arrêt des câbles 11, 12, la manivelle 29 est actionnée par le personnel afin de régler l'angle entre la partie supérieure 15 et la partie inférieure 14 pour qu'il soit sensiblement égal à zéro. Après ce réglage, la partie inférieure 15 (et donc la cabine) est sensiblement parallèle aux câbles 11, 12. Cette position inclinée de la cabine 13 par rapport à la verticale (position qui n'est pas représentée), facilite l'intervention par le personnel directement depuis la cabine 13 sur les balanciers car ces derniers sont inclinés parallèlement à la pente des câbles 11, 12.

Les moyens de liaison entre la cabine 13 et les câbles 11, 12 comportent en outre des moyens de blocage de la cabine 13 en position inclinée. Il est clair que ces moyens de blocage seront actionnés par le personnel après après mise en oeuvre du réglage précité. Dans d'autres variantes, il est possible de prévoir que le blocage soit automatique dès que le personnel relâche la manivelle 29 après le réglage de la cabine 13 en position inclinée. De tels moyens de blocage peuvent être réalisés par tout moyen mécanique connu (par exemple un mécanisme à cliquets anti-retour) qui permette un blocage positif de la cabine 13 en position inclinée. Les moyens de blocage peuvent être déverrouillés dès que nécessaire, notamment pendant le déplacement du véhicule 10 en ligne pour le confort du personnel.

D'autre part, il est possible de prévoir des moyens de débrayage (non représentés) intercalés entre les moyens d'articulation et les moyens de réglage. De tels moyens de débrayage seront utilisés tant que le véhicule d'intervention est en ligne et à distance du balancier à réparer ou à vérifier. De tels moyens de débrayage peuvent être réalisés par tout moyen mécanique connu et adapté.

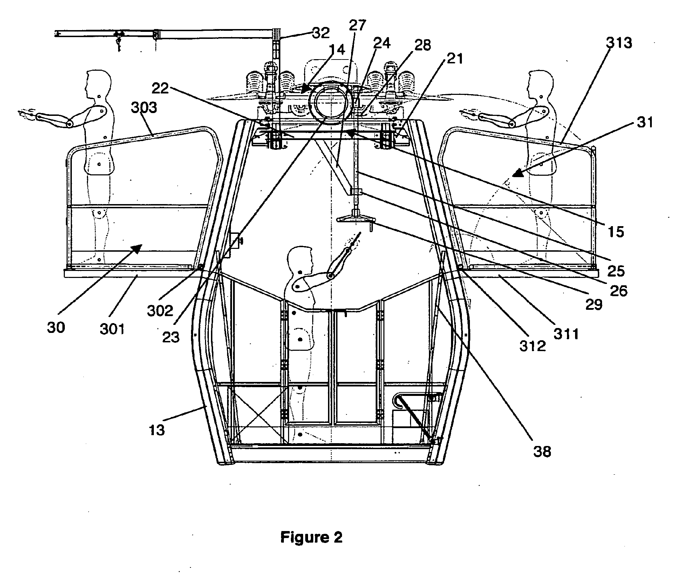

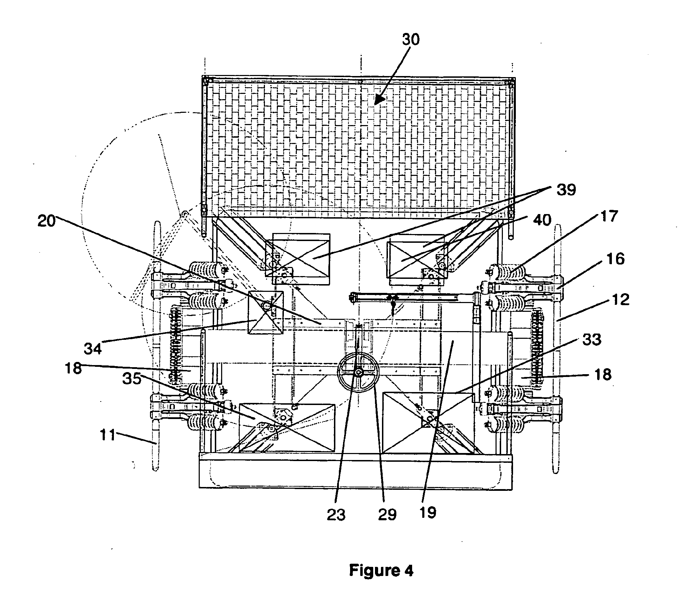

Pour permettre un accès aisé à un balancier de l'installation après le transfert du véhicule d'intervention 10 à ce balancier par les câbles 11, 12, et après le réglage et le blocage de la cabine 13 en position inclinée, la cabine 13 comporte au moins une plateforme mobile par des moyens de déplacement entre une position rétractée (figure 1) où la plateforme est logée à l'intérieur de la cabine 13 et une position déployée (figure 2) où la plateforme est à l'extérieur de la cabine 13. L'exemple illustré sur les figures 1 à 4 comporte deux plateformes longitudinalement opposées, repérées 30, 31, disposées respectivement en amont et en aval de la cabine 13 (suivant la direction longitudinale de déplacement du véhicule 10) lorsqu'elles sont en position déployée. Lorsque la cabine 13 est en position inclinée et que les plateformes 30, 31 sont en position déployée, les planchers 301, 311 des plateformes 30, 31 sont sensiblement parallèles aux câbles 11, 12. Toutefois, pour compenser une inclinaison excessive de la cabine en position inclinée, la cabine 13 est équipée de moyens d'ajustement (non représentés) de l'inclinaison du plancher 301, 311 de chaque plateforme (30, 31), lorsqu'elle est en position déployée, par rapport au sol de la cabine 13. Lorsqu'une plateforme 30, 31 est en position rétractée, son plancher 301, 311 est plaqué à l'extérieur de la paroi correspondante de la cabine 13. Sur la figure 4, seule la plateforme 30 est représentée en position déployée. Des échelles 38 permettent d'accéder aux plateformes 30, 31 depuis le sol de la cabine 13.

Dans l'exemple illustré, les moyens de déplacement associés à une plateforme 30, 31 comportent une charnière, respectivement 302, 312, dont l'axe est parallèle au sol de la cabine 13. Chaque plateforme 30, 31 est montée sur la cabine 13 suivant une liaison pivot d'axe parallèle au sol de la cabine 13. La cabine 13 comporte des moyens de réglage en hauteur de la charnière 302, 312 par rapport au sol de la cabine 13. Néanmoins, les moyens de déplacement peuvent comporter une liaison glissière de direction incluse dans un plan perpendiculaire au sol de la cabine.

Que les moyens de déplacement associés à une plateforme 30, 31 comportent une charnière ou une liaison glissière, la mise en mouvement de la plateforme 30, 31 pour le passage d'une position à l'autre peut être soit manuelle, soit électrique.

Pour garantir une sécurité maximale, chaque plateforme 30, 31 comporte un garde-corps 303, 313 monté sur le plancher 301, 311 de la plateforme 30, 31 de telle manière que le garde-corps 303, 313 soit déplié au passage de la plateforme 30, 31 en position déployée, et replié au passage en position rétractée. Néanmoins, les garde-corps 303, 313 peuvent être montés fixes sur les planchers 301, 311 sans sortir du cadre de l'invention. La structure tubulaire de chaque garde-corps 303, 313, de même qu'un portillon d'accès à la cabine 13, peuvent être garnis de panneaux de remplissage 37, éventuellement transparents.

Pour faciliter les opérations effectuées le long des câbles aériens 11, 12, la partie inférieure 15 comporte un bras de manipulation 32 articulé selon un axe perpendiculaire au toit de la cabine 13, potentiellement télescopique. De plus, la cabine 13 comporte un groupe électrogène 33 et/ou une batterie d'alimentation électrique 34 et/ou une centrale de graissage 35 et/ou une ou plusieurs caisse(s) à outils 39 logée(s) sous des sièges rabattables 40.

Enfin, il est clair que l'invention peut être adaptée à une installation de remontée mécanique ne possédant qu'un seul câble aérien, comme par exemple un télécabine ou un télésiège. Dans ce cas, la partie supérieure des moyens de liaison est constituée uniquement par une pince d'accrochage au câble tandis que la partie inférieure est constituée par une suspente solidaire du véhicule. Les moyens d'articulation de la pince par rapport à la suspente autorisent un premier pivotement relatif de la suspente et de la pince dans un premier plan vertical incluant le câble, et éventuellement un deuxième pivotement relatif dans un deuxième plan vertical perpendiculaire audit premier plan. Conformément à l'invention, les moyens de liaison comporteront des moyens de réglage de l'angle formé entre la pince et la suspente dans le premier plan, jusqu'à une position de la cabine inclinée par rapport à la verticale dans le premier plan, ainsi que des moyens de blocage de la cabine en position inclinée.

## Revendications

1. Véhicule d'intervention (10) le long d'un câble aérien (11, 12) d'une installation de remontée mécanique, comprenant une cabine (13) suspendue au câble (11, 12) par des moyens de liaison comprenant :
- une partie supérieure (14) fixée au câble (11, 12),
- une partie inférieure (15) fixée à la cabine (13),
- et des moyens d'articulation (19, 20) de la partie supérieure (14) par rapport à la partie inférieure (15), autorisant un pivotement relatif, dans un plan vertical parallèle au câble (11, 12), des parties supérieure (14) et inférieure (15) formant entre elles un angle variable,
**caractérisé en ce que** les moyens de liaison comportent d'une part des moyens de réglage (23, 24, 25, 29) de l'angle entre la partie inférieure (15) et la partie supérieure (14), jusqu'à une position de la cabine (13) inclinée par rapport à la verticale, et d'autre part des moyens de blocage de la cabine (13) en position inclinée.

2. Véhicule selon la revendication 1, **caractérisé en ce que** les moyens de réglage (23, 24, 25, 29) comportent une roue dentée (23) fixée sur la partie supérieure (14) dans un plan parallèle audit plan vertical et coopérant avec une vis sans fin (24) montée à rotation sur la partie inférieure (15).

3. Véhicule selon la revendication 2, **caractérisé en ce que** la vis sans fin (24) est fixée à une extrémité d'un arbre de transmission (25) muni à son extrémité opposée d'une manivelle (29) positionnée à l'intérieur de ladite cabine (13).

4. Véhicule selon l'une des revendications 1 à 3, **caractérisé en ce que** des moyens de débrayage sont intercalés entre les moyens d'articulation (19, 20) et les moyens de réglage (23, 24, 25, 29).

5. Véhicule selon l'une des revendications 1 à 4, **caractérisé en ce que** la partie inférieure (15) comporte un bras de manipulation (32) articulé.

6. Véhicule selon l'une des revendications 1 à 5, **caractérisé en ce que** la cabine (13) comporte au moins une plateforme (30, 31) mobile par des moyens de déplacement entre une position rétractée où la plateforme (30, 31) est logée à l'intérieur de ladite cabine (13) et une position déployée où la plateforme (30, 31) est à l'extérieur de la cabine (13).

7. Véhicule selon la revendication 6, **caractérisé en ce que** les moyens de déplacement comportent une charnière (302, 312) d'axe parallèle au sol de la cabine (13).

8. Véhicule selon la revendication 7, **caractérisé en ce que** la cabine (13) comporte des moyens de réglage en hauteur de la charnière (302, 312) par rapport au sol de la cabine (13).

9. Véhicule selon l'une des revendications 7 et 8, **caractérisé en ce que** la cabine (13) est équipée de moyens d'ajustement de l'inclinaison du plancher (301, 311) de la plateforme (30, 31) en position déployée, par rapport au sol de la cabine (13).

10. Véhicule selon la revendication 6, **caractérisé en ce que** les moyens de déplacement comportent une liaison glissière de direction incluse dans un plan perpendiculaire au sol de la cabine (13).

11. Véhicule selon l'une des revendications 1 à 10, **caractérisé en ce que** la cabine (13) comporte un groupe électrogène (33) et/ou une batterie d'alimentation électrique (34) et/ou une centrale de graissage (35).

## Claims

1. A maintenance vehicle (10) for performing operations along an aerial ropeway (11, 12) of a mechanical lift installation comprising a car (13) suspended on the rope (11, 12) by connecting means comprising:
- a top part (14) fixed to the rope (11, 12),
- a bottom part (15) fixed to the car (13),
- and articulation means (19, 20) of the top part (14) with respect to the bottom part (15) allowing relative swivelling, in a vertical plane parallel to the rope (11, 12), of the top (14) and bottom (15) parts forming a variable angle between them,
**characterized in that** the connecting means on the one hand comprise adjustment means (23, 24, 25, 29) for adjusting the angle between the bottom part (15) and the top part (14), up to an inclined position of the car (13) with respect to the vertical, and on the other hand comprise means for securing the car (13) in the inclined position.

2. The vehicle according to claim 1, **characterized in that** the adjustment means (23, 24, 25, 29) comprise a cog-wheel (23) fixed on the top part (14) in a plane parallel to said vertical plane and operating in conjunction with an endless screw (24) mounted rotating on the bottom part (15).

3. The vehicle according to claim 2, **characterized in that** the endless screw (24) is fixed to one end of a transmission shaft (25) equipped at its opposite end with a crank (29) positioned inside said car (13).

4. The vehicle according to one of claims 1 to 3, **characterized in that** disengagement means are inserted between the articulation means (19, 20) and the adjustment means (23, 24, 25, 29).

5. The vehicle according to one of claims 1 to 4, **characterized in that** the bottom part (15) comprises an articulated operating arm (32).

6. The vehicle according to one of claims 1 to 5, **characterized in that** the car (13) comprises at least one platform (30, 31) able to be moved by moving means between a retracted position where the platform (30, 31) is housed inside said car (13) and an extended position where the platform (30, 31) is outside the car (13).

7. The vehicle according to claim 6, **characterized in that** the moving means comprise a hinge (302, 312) with an axis parallel to the floor of the car (13).

8. The vehicle according to claim 7, **characterized in that** the car (13) comprises means for adjusting the height of the hinge (302, 312) with respect to the floor of the car (13).

9. The vehicle according to one of claims 7 and 8, **characterized in that** the car (13) is equipped with means for adjusting the incline of the floor (301, 311) of the platform (30, 31) with respect to the floor of the car (13), in the extended position.

10. The vehicle according to claim 6, **characterized in that** the moving means comprise a sliding link in a direction included in a plane perpendicular to the floor of the car (13).

11. The vehicle according to one of claims 1 to 10, **characterized in that** the car (13) comprises an electricity generating set (33) and/or an electric power supply battery (34) and/or a lubrication unit (35).

## Patentansprüche

1. Fahrzeug für Arbeiten (10) entlang eines Luftseils (11, 12) einer mechanischen Aufstiegsanlage, das eine Kabine (13) umfasst, die am Seil (11, 12) mittels Verbindungsmitteln aufgehängt ist, umfassend:
- einen oberen Teil (14), der am Seil (11, 12) befestigt ist,
- einen unteren Teil (15), der an der Kabine (13) befestigt ist,
- und Mittel zum Schwenken (19, 20) des oberen Teils (14) bezüglich dem unteren Teil (15), die eine relative Schwenkbewegung des oberen Teils (14) und des unteren Teils (15), die miteinander einen variablen Winkel bilden, auf einer vertikalen, zum Seil (11, 12) parallelen Ebene erlauben,
**dadurch gekennzeichnet, dass** die Verbindungsmittel einerseits Mittel zum Einstellen (23, 24, 25, 29) des Winkels zwischen dem unteren Teil (15) und dem oberen Teil (14) bis zu einer bezüglich der Vertikalen geneigten Position der Kabine (13) und andererseits Mittel zum Blockieren der Kabine (13) in geneigter Position umfassen.

2. Fahrzeug nach Anspruch 1, **dadurch gekennzeichnet, dass** die Mittel zum Einstellen (23, 24, 25, 29) ein Zahnrad (23) umfassen, das am oberen Teil (14) auf einer zur genannten vertikalen Ebene parallelen Ebene befestigt ist und mit einer Schraube ohne Ende (24) zusammenwirkt, die drehbar am unteren Teil (15) montiert ist.

3. Fahrzeug nach Anspruch 2, **dadurch gekennzeichnet, dass** die Schraube ohne Ende (24) an einem Ende einer Antriebswelle (25) angebracht ist, die an ihrem anderen Ende mit einer Kurbel (29) versehen ist, die innerhalb der Kabine (13) angeordnet ist.

4. Fahrzeug nach einem der Ansprüche 1 bis 3, **dadurch gekennzeichnet, dass** zwischen den Mitteln zum Schwenken (19, 20) und den Einstellmitteln (23, 24, 25, 29) Ausrückmittel vorgesehen sind.

5. Fahrzeug nach einem der Ansprüche 1 bis 4, **dadurch gekennzeichnet, dass** der untere Teil (15) einen angelenkten Bedienungsarm (32) umfasst.

6. Fahrzeug nach einem der Ansprüche 1 bis 5, **dadurch gekennzeichnet, dass** die Kabine (13) mindestens eine Plattform (30, 31) umfasst, die mit Hilfe von Bewegungsmitteln zwischen einer eingezogenen Position, in der sich die Plattform (30, 31) innerhalb der Kabine (13) befindet, und einer ausgefahrenen Position beweglich ist, in der sich die Plattform (30, 31) außerhalb der Kabine (13) befindet.

7. Fahrzeug nach Anspruch 6, **dadurch gekennzeichnet, dass** die Bewegungsmittel ein Gelenk (302, 312) umfassen, dessen Achse parallel zum Boden der Kabine (13) ist.

8. Fahrzeug nach Anspruch 7, **dadurch gekennzeichnet, dass** die Kabine (13) Mittel zum Verstellen der Höhe des Gelenks (302, 312) bezüglich dem Boden der Kabine (13) umfasst.

9. Fahrzeug nach einem der Ansprüche 7 und 8, **dadurch gekennzeichnet, dass** die Kabine (13) mit Mitteln zum Anpassen der Neigung des Bodens (301, 311) der Plattform (30, 31) in ausgefahrener Position bezüglich dem Boden der Kabine umfasst.

10. Fahrzeug nach Anspruch 6, **dadurch gekennzeichnet, dass** die Bewegungsmittel eine Gleitschienenverbindung umfassen, deren Richtung auf einer zum Boden der Kabine (13) lotrechten Ebene enthalten ist.

11. Fahrzeug nach einem der Ansprüche 1 bis 10, **dadurch gekennzeichnet, dass** die Kabine (13) ein Stromaggregat (33) und/oder eine Stromversorgungsbatterie (34) und/oder eine Schmierstation (35) umfasst.
